**Europäisches Patentamt**

**European Patent Office**

**Office européen des brevets**

(11) Veröffentlichungsnummer: **0 146 139**
**A2**

# (12) EUROPÄISCHE PATENTANMELDUNG

(21) Anmeldenummer: **84115684.7**

(22) Anmeldetag: **18.12.84**

(51) Int. Cl.⁴: **G 03 B 23/04**

(30) Priorität: **20.12.83 DE 3345968**

(43) Veröffentlichungstag der Anmeldung: **26.06.85**
**Patentblatt 85/26**

(84) Benannte Vertragsstaaten: **AT BE FR GB IT NL SE**

(71) Anmelder: **Carl Braun Camera-Werk GmbH, Muggenhofer Strasse 122, D-8500 Nürnberg 80 (DE)**

(72) Erfinder: **Mäusbacher, Rainer, Schweriner Strasse 71, D-8500 Nürnberg 90 (DE)**

(54) **Diamagazin.**

(57) Bei einem Diamagazin, insbesondere mit einem prismatischen Gehäuse, das nebeneinander eine Anzahl durch Trennwände gebildete Aufnahmekammern für Dias aufweist, die auf der der Austrittsseite gegenüberliegenden Seite eine Durchtrittsöffnung für einen Schieber zum Transport der Dias aufweisen und bei dem durch Zusammenwirken von Transportschieber und den Trennwänden im Bereich der Durchtrittsöffnung schrittweise ein Längshub des Diamagazins erfolgt, sind zum sicheren Ausstossen der Dias aus beliebig breiten Aufnahmekammern die Trennwände im Bereich der Durchtrittsöffnungen über eine Teilhöhe des Transportschiebers unterbrochen und begrenzen mit Teilabschnitten über eine weitere Teilhöhe die Durchtrittsöffnungen.

0146139

CARL BRAUN CAMERA-WERK GMBH, 8500 NÜRNBERG 80

Diamagazin

Die Erfindung betrifft ein Diamagazin, insbesondere mit einem prismatischen Gehäuse, das nebeneinander eine Anzahl durch Trennwände gebildete Aufnahmekammern für Dias aufweist, die auf der der Austrittsseite gegenüberliegenden Seite eine Durchtrittsöffnung für einen Schieber zum Transport der Dias aufweisen und bei dem durch Zusammenwirken von Transportschieber und den Trennwänden im Bereich der Durchtrittsöffnung schrittweise ein Längshub des Diamagazins erfolgt.

Es ist bekannt, daß der Transportschieber für Dias für den Ausstoßvorgang und den Längshüben eine vorbestimmte Festigkeit aufzuweisen hat und hierzu mit einer vorbestimmten Breite ausgebildet ist. Außerdem ist bei Diaprojektoren, die für die Benutzung mehrerer Magazintypen mit unterschiedlich breiten Aufnahmekammern geeignet sind, bekannt, unterschiedlich große Transporthübe vorzusehen. Weiter ist bekannt, daß sich die Breite des Diaschiebers dabei nach dem Magazintyp mit den engsten Aufnahmekammern ausrichtet, wodurch ein sicheres Ausstoßen von dünnen Dias aus breiteren Aufnahme-

0146139

kammern eines anderen Magazintyps nicht sicher gewährleistet ist. Darüber hinaus lassen mit geringer Breite
ausgeführte Diaschieber die für den Transporthub erforderliche Stabilität vermissen. Es ist zwar bekannt,
eine Verbreiterung bei Diaschiebern durch die Anordnung von über eine Teillänge derselben sich erstreckenden Reitern zu erreichen. Abgesehen davon, daß hierdurch die Stabilität dünner Diaschieber nach wie vor
gering bleibt, ist die Handhabung der Reiter und ihre
Ausbildung fertigungstechnisch aufwendig.

Es ist Aufgabe der Erfindung, bei einem Diamagazin
Maßnahmen zu schaffen, die ein sicheres Ausstoßen von
Dias aus beliebig breiten Aufnahmekammern möglich machen.

Der Erfindung gemäß ist diese Aufgabe dadurch gelöst,
daß die Trennwände im Bereich der Durchtrittsöffnungen
über eine Teilhöhe des Transportschiebers unterbrochen
sind und mit Teilabschnitten über eine weitere Teilhöhe
die Durchtrittsöffnungen begrenzen. Hierdurch bilden
die Trennwände über eine Teilhöhe Durchlässe für mit
großer Breite ausgebildeten, stabilen Transportschiebern
und ermöglichen mit den verbleibenden Teilabschnitten
in Zusammenwirken mit einem abgesetzten Teil des Transportschiebers Transporthübe des Diamagazins.

0146139

In Ausgestaltung des Diamagazins ist vorgesehen, die Teilabschnitte am transportschieberseitigen Ende mit Einlaufschrägen zu versehen. Die Einlaufschrägen ergeben sichere Längshübe für das Diamagazin. Darüber hinaus besteht auch die Möglichkeit den Teilabschnitten transportschieberseitig mit der Höhe derselben ausgebildete Keilkörper vorzustellen, wobei bevorzugt die Keilkörper mit gegenüber den Teilabschnitten der Trennwände größerer Breite ausgeführt sind.

Die Erfindung ist anhand eines Ausführungsbeispiels in der Zeichnung erläutert.

Es zeigen:

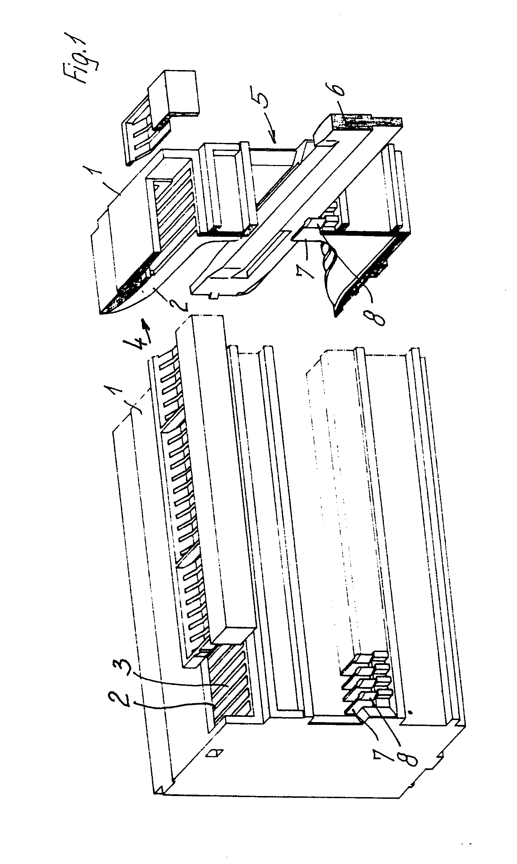

Fig. 1   ein Diamagazin perspektivisch,

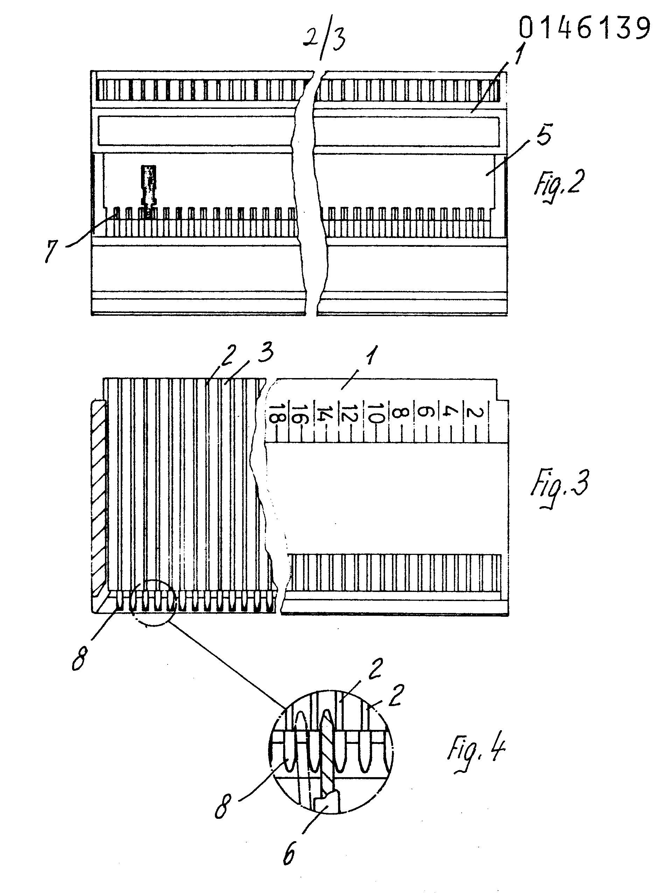

Fig. 2   ein Diamagazin in Rückansicht,

Fig. 3   ein Diamagazin in Draufsicht, teilweise im Schnitt,

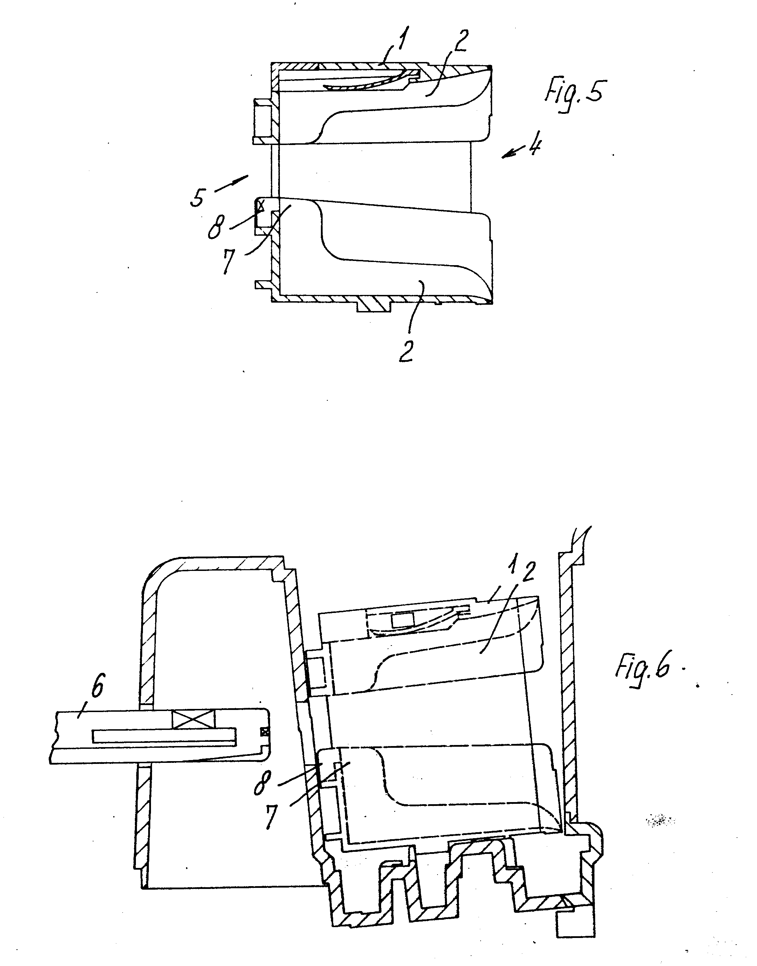

Fig. 4   ein Teilstück eines Diamagazins, vergrößert,

Fig. 5   ein Diamagazin im Schnitt nach der Linie V-V der Fig. 1 und

Fig. 6   ein Diamagazin in einer Magazinführung.

Das Diamagazin weist ein prismatisches Gehäuse 1 auf, das durch Trennwände 2 in Aufnahmekammern 3 für Diapositive (nicht gezeigt) aufgeteilt ist. Die Aufnahmekammern 3 weisen eine Austrittsöffnung 4 auf, über die die Dias in die Bildbühne und zurück transportierbar sind, während gegenüberliegend eine Durchtrittsöffnung 5

0146139

für einen Transportschieber 6 vorgesehen ist. Das gezeigte Diamagazin ist als sogenanntes Kompaktmagazin mit besonders engen Aufnahmekammern 3 versehen, die die Aufnahme dünner Dias, z. B. Pappdias, erlauben. Über die Durchtrittsöffnungen 5 werden durch Einschieben des Transportschiebers 6 die in den Aufnahmekammern 3 befindlichen Diapositive ausgeschoben. Weiter ermöglicht der Transportschieber 6 durch eine beim Einbringen in die Aufnahmekammern 3 eingenommene Schrägstellung in Zusammenwirken mit den Trennwänden 2 periodisch Längshübe auf das Diamagazin zu legen.

Erfindungsgemäß sind die Trennwände 2 zur Durchleitung eines, z. B. über eine Teilhöhe verbreiterten Transportschiebers 6 im Bereich einer Teilhöhe der Durchtrittsöffnungen 5 unterbrochen, während Teilabschnitte 7 die Durchtrittsöffnungen über eine weitere Teilhöhe begrenzen. Auf diese Weise ist erreicht, daß die Aufnahmekammern 3 und Trennwandabschnitte zum Durchführen des Transportschiebers, insbesondere eines verbreiterten Teils desselben, zur Verfügung steht, während durch Zusammenwirken der Teilabschnitte mit einem, insbesondere verschmälerten Teil des Transportschiebers 6 die Transporthübe für das Diamagazin bewirkt werden.

Zweckmäßig sind beim Ausführungsbeispiel den Teilabschnitten 7 transportschieberseitig Keilkörper 8

0146139

vorgestellt, die durch Zusammenwirken mit einem verschmälerten Teil des Transportschiebers 6 die Längshübe sicher bewirken. Bevorzugt sind die Keilkörper 8
mit einer gegenüber den Trennwänden 2 größeren Breite
ausgeführt, wodurch freie reibungsarme Durchführungen
des Transportschiebers 6 durch die Aufnahmekammern 3
gewährleistet sind. Außerdem führt die durch Verbreiterung der Keilkörper erzielte Verengung der Durchführungsöffnungen zu spielfreien Transporthüben.

0146139

Patentansprüche

1. Diamagazin, insbesondere mit einem prismatischen Gehäuse, das nebeneinander eine Anzahl durch Trennwände gebildete Aufnahmekammern für Dias aufweist, die auf der der Austrittsseite gegenüberliegenden Seite eine Durchtrittsöffnung für einen Schieber zum Transport der Dias aufweisen und bei dem durch Zusammenwirken von Transportschieber und den Trennwänden im Bereich der Durchtrittsöffnung schrittweise ein Längshub des Diamagazins erfolgt, dadurch gekennzeichnet, daß die Trennwände im Bereich der Durchtrittsöffnungen über eine Teilhöhe des Transportschiebers unterbrochen sind und mit Teilabschnitten über eine weitere Teilhöhe die Durchtrittsöffnungen begrenzen.

2. Diamagazin nach Anspruch 1, dadurch gekennzeichnet, daß die Teilabschnitte am transportschieberseitigen Ende keilförmig entgegengerichtete Einlaufschrägen aufweisen.

3. Diamagazin nach Anspruch 1, dadurch gekennzeichnet, daß den Teilabschnitten transportschieberseitig mit der Höhe derselben ausgebildete Keilkörper vorgestellt sind.

0146139

4. Diamagazin nach Anspruch 3, dadurch gekennzeichnet, daß die Keilkörper eine gegenüber den Teilabschnitten größere Breite aufweisen.

Fig.1

0146139

2/3

0146139

Fig.2

5

1

7

2 3 1

18 16 14 12 10 8 6 4 2

Fig.3

8

2 2

8

6

Fig. 4

Fig.5

Fig.6